Europäisches Patentamt

European Patent Office

Office européen des brevets

(19)

(11) Veröffentlichungsnummer: **0 095 062 B2**

## (12) NEUE EUROPÄISCHE PATENTSCHRIFT

(45) Veröffentlichungstag der neuen Patentschrift:
10.07.91 Patentblatt 91/28

(51) Int. Cl.⁵: **B23B 27/04**

(21) Anmeldenummer: 83104337.7

(22) Anmeldetag: 03.05.83

(54) Spanabhebendes Werkzeug mit geklemmtem Schneideinsatz.

(30) Priorität: 21.05.82 DE 3219150

(43) Veröffentlichungstag der Anmeldung:
30.11.83 Patentblatt 83/48

(45) Bekanntmachung des Hinweises auf die
Patenterteilung:
10.12.86 Patentblatt 86/50

(45) Bekanntmachung des Hinweises auf die
Entscheidung über den Einspruch:
10.07.91 Patentblatt 91/28

(84) Benannte Vertragsstaaten:
AT BE CH DE FR GB IT LI LU NL SE

(56) Entgegenhaltungen:
CH-A- 459 705
CH-A- 620 848
DE-A- 2 206 654
DE-A- 2 305 111
DE-A- 2 647 546
DE-A- 2 755 003
DE-A- 2 834 747
DE-A- 3 133 029
DE-B- 2 021 200
DE-C- 3 219 150

(56) Entgegenhaltungen:
GB-A- 1 266 182
SU-A- 709 260
US-A- 174 216
US-A- 207 003
US-A- 363 349
US-A- 383 103
US-A- 867 275
US-A- 1 601 82
US-A- 2 787 360
US-A- 3 463 206
US-A- 3 894 322
US-A- 4 195 956
DIN 6584
Stahl und Eisen, Prüfblatt 1168-69.

(73) Patentinhaber: Zinner, Karl
Uehlfelder Strasse 21
W-8500 Nürnberg 80 (DE)

(72) Erfinder: Zinner, Karl
Uehlfelderstrasse 21
W-8500 Nürnberg 80 (DE)

(74) Vertreter: Patentanwälte Czowalla. Matschkur
& Partner
Dr.-Kurt-Schumacher-Strasse 23 Postfach
9109
W-8500 Nürnberg 11 (DE)

## Beschreibung

Die Erfindung bezieht sich auf ein spanabhebendes Werkzeug, insbesondere Stechwerkzeug mit einer gabelartig geschlitzten Halterplatte zum Einklemmen eines Schneideinsatzes, wobei der Klemmschlitz so ausgebildet ist, daß die Klemmbakken der Halterplatte den Schneideinsatz mit einer vorgegebenen Klemmspannung haltern.

Derartige, insbesondere für Einstechwerkzeuge bekanntgewordene Stechwerkzeuge sind in den bisher bekanntgewordenen Ausführungsformen so ausgebildet, daß der Halteabschnitt des Schneideinsatzes lose, allenfalls mit einem geringfügigen Paßeinsatz von vorne in den Klemmschlitz der Halterplatte eingeschoben wird. Daraus resultiert aber ersichtlich eine nur sehr unbefriedigende Haltewirkung. In einer anderen Ausführungsform eines solchen Selbstklemmsystems mit stark konischer Ausbildung ohne Festanschlag ergibt sich ein Werkzeug, welches praktisch nur zum Abstechen, nicht aber für Einstiche geeignet ist. Durch die keilartige Form spreizt sich das Material auseinander, so daß weder eine genaue Höheneinstellung, noch eine präzise Wiederholgenauigkeit gegeben ist.

Bei einem aus der DE-A-2 755 003 bekanntgewordenen Schneidwerkzeug der eingangs beschriebenen Art ist zur Erhöhung des Klemmdrucks eine Spreizschraube vorgesehen, mit Hilfe deren der obere Klemmbacken gegenüber dem starren unteren Klemmbacken verschwenkt werden kann. Diese Anordnung bedingt jedoch einen sehr hohen baulichen Aufwand einerseits und setzt darüber hinaus ein sehr breitbauendes Werkzeug voraus, da es zu diesem Zweck erforderlich ist, daß der obere Klemmbacken einen seitlich abgewinkelten Schenkel besitzt, an welchen die genannte Spreizschraube angreifen kann.

Bei einem bekannten Abstechstahl mit auswechselbarer Schneide (DE-A-28 34 747) ist ein loser Klemmbacken mit seinem Schaft in einer Ausnehmung in die Werkzeughalterung linear verschiebbar angeordnet. Da der Klemmbacken für das einzuspannende Schneidwerkzeug eine Anschlagschulter besitzt, folgt er dem Schneidwerkzeug bei dessen Eintreiben zwischen einem festen und dem losen Klemmbacken, wobei deren Abstand voneinander immer geringer wird. Dies bedeutet, daß die Spannkraft an der Werkzeug-Einspannstelle mit zunehmendem Schnittdruck ansteigt. Allerdings bedingt die Aufnahme einer losen Klemmbacke in einer Führung einen verhältnismäßig komplizierten Aufbau, und herstellungstechnisch stellt sich das Problem, daß die Halterung mit der festen Klemmbacke und der losen Klemmbacke in deren Verhältnis zueinander sehr enge Fertigungstoleranzen einhalten muß, andernfalls wäre im Schneidbetrieb eine halbwegs stabile Schneidkantenstellung nicht gewährleistet.

Auf dem Gebiet der Holzsägen ist ein spanabhebendes Werkzeug mit den Merkmalen des ersten Teils des beigefügten Patentanspruchs 1 bekannt (US-A-174 216). Dieses weist ein Sägeblatt auf, das mit mehreren Klemmschlitzen versehen ist, in welches Sägezähne im Paßsitz einsteckbar sind. Dabei ist ein Abschnitt des Sägeblatts als federnde, den Sägezahn an den übrigen Sägezahnkörper andrückende Klemmbacke ausgebildet. Von dieser federnden Klemmbacke aus steht in den Klemmschlitz eine Anschlagschulter vor, welche ein zu tiefes Hineinrutschen des Sägezahns in den Klemmschlitz verhindern soll. Zwar ist bei diesem bekannten Werkzeug der Klemmschlitz ab dem Bereich der Anschlagschulter mit einer kreisbogenförmigen Erweiterung versehen, in die ein Aufspreizschlüssel gesteckt und verdreht werden kann, um das Einschieben eines Sägezahns zu ermöglichen ; jedoch ist diese Erweiterung durch eine Ausnehmung ausschließlich im Bereich der gegenüberliegenden, nicht federnden Klemmbacke gebildet. Da ferner beide gegenüber-liegenden Klemmbacken vollflächig, das heißt mit ihrer gesamten Länge den Sägezahnkörper einklemmen, besteht die Gefahr, daß beim im praktischen Betrieb unvermeidlichen Auseinanderbewegen der beiden Klemmbacken eine zur Klemmschlitzöffnung zunehmende Divergenz zwischen der Klemmbackenoberfläche und der Oberfläche des Sägezahnkörpers auftritt, wodurch der im Klemmschlitz befindliche Sägezahn einer Kraft unterworfen wird, die diesen tendenziell aus den Klemmschlitz herausdrückt.

Der Erfindung liegt daher die Aufgabe zugrunde, ein spanabhebendes Werkzeug mit Klemmhalterung für den Schneideinsatz so auszugestalten, daß bei einfacher Herstellbarkeit eine exakte, mit großer Wiederholgenauigkeit einstellbare Halterung mit vorgebbarer Klemmkraft möglich ist und ein Herausdrücken des Schneideinsatzes aus der Halterplattengabelung nicht zu befürchten ist. Insbesondere soll während des Schneidbetriebs die ursprüngliche Schneidkanteneinstellung exakt beibehalten werden können, indem in spezifizierter Weise der über den Schneideinsatz am Anschlag angreifende Schnittdruck in eine proportionale Klemmkrafterhöhung umgesetzt wird.

Diese Aufgabe wird durch die in Anspruch 1 angegebenen Merkmale gelöst.

Durch diese Maßnahme unterscheidet sich der Anmeldungsgegenstand grundlegend vom bisherigen Stand der Technik (man vergleiche hierzu beispielsweise die deutschen Offenlegungsschriften 3 133 029, 2 305 111 und 2 206 654), bei denen ein Einschubbegrenzungs-Anschlag wenn überhaut, dann am unteren Klemmbacken angeordnet ist, so daß die Schneidkräfte zu keiner irgendwie gearteten Veränderung der Klemmspannung führen. Umfangreiche, der vorliegenden Erfindung zugrundeliegenden Versuche haben nun aber gezeigt, daß erst die durch den Schnittdruck bewirkte Vergrößerung der Klemmkraft eine wirklich funktionsfähige Klemmhalterung unter harten Betriebsbedingungen ermöglicht, die ohne zusätzliche Schraubverspannungen auskommt und in gleicher Weise extrem einfach ein Wiederlösen und ein Auswechseln der Schneideinsätze ermöglicht.

Durch die erfindungsgemäße Ausbildung ist erreicht, daß bei erhöhtem Schnittdruck, d.h. bei besonders starker Belastung das Sichabstützen des Schneideinsatzes am oberen Klemmbacken ohne irgendeine Lageveränderung — wie es der Fall sein müßte, wenn eine Keilspannung für eine solche Spanndruckerhöhung ausgenutzt werden sollte — zu einer entsprechenden proportionalen Erhöhung des Klemmdrucks führt. Je höher die Belastung, desto stärker ist die Spannung des Schneideinsatzes, was genau den optimalen Einsatzbedingungen entspricht.

Erfindungsgemäß steigt die Klemmfläche des aufspreizbaren oberen Klemmbackens in der Einsatzstellung gegenüber der Klemmfläche des Schneideinsatzes leicht nach innen an, was sich am einfachsten dadurch erreichen läßt, daß die Klemmflächen der Halterplatte nach rückwärts, vorzugsweise parallel zueinander, ausgebildet sind oder geringfügig konvergieren, in jedem Fall aber weniger konvergieren als die Klemmflächen des Schneideinsatzes. Hierdurch liegt der eigentliche Klemmpunkt in erheblichem Abstand vom hinteren Ende des Schneideinsatzes, wobei zusätzlich der Vorteil entsteht, daß unabhängig vom Maß des Aufspreizens keinesfalls eine Keilwirkung im umgekehrten Sinn erzielt wird, die zu einem Herausdrücken des Schneideinsatzes aus dem Einsatzschlitz führen kann oder die Tendenz dieses Herausziehens unterstützen würde. Dabei ist es zweckmäßig, konvergierende Klemmflächen beim Schneidkörper vorzusehen und demzufolge parallele Klemmflächen der Klemmbacken der Halterplatte, als umgekehrt nach rückwärts divergierende Klemmflächen in der Halterplatte, da dies in der Praxis aufwendiger zu bewerkstelligen ist.

Dabei kann vorgesehen sein, daß der Klemmschlitz so ausgebildet ist, daß die Klemmbacken der Halterplatte durch ein Werkzeug aufspreizbar den Schneideinsatz mit einer vorgegebenen Klemmspannung haltern. Das Vorsehen eines Klemmschlitzes derart, daß seine normale Ruheöffnung kleiner ist als der Klemmteil des zu halternden Schneideinsatzes in Verbindung mit der Aufspreizbarkeit — die besonders vorteilhaft dadurch erzielt werden kann, daß ein im wesentlichen ovaler Schlitzbereich zum Einsetzen eines entsprechenden Aufspreizschlüssels vorgesehen ist — führt zu einer wirklich festen, auch unter ungünstigen Betriebsbedingungen ausreichenden Halterung des Schneideinsatzes, so daß sich nicht nur Einstech- und Abstechwerkzeuge auf diese Weise realisieren lassen, sondern auch rotierende Werkzeuge (siehe unten), Scheibenfräser, Zirkularfräser, Hochgeschwindigkeitssägen usw. und sogar spanabhebende Werkzeuge mit auf diese Art und Weise geklemmten Schneidplatten aufgebaut werden können.

Um eine auch gegen Querkräfte stabile Halterung zu erzielen soll gemäss einem bevorzugten Merkmal der vorliegenden Erfindung die Klemmfläche wenigstens eines Klemmbackens mit einer zur Ausbildung der anliegenden Klemmfläche des Schneideinsatzes korrespondierenden, vorzugsweise querschnittlich dreieckigen. Einmuldung bzw. Wölbung versehen sein. Durch doppelprismatische Ausbildung des Halterungsabschnittes oder umgekehrt durch einander gegenüberrliegende Dreiecksnuten in den Klemmflächen des Schneideinsatzes, ergibt sich dabei eine besonders gute Halterung und Absicherung gegenüber Querbeanspruchungen.

Der aufspreizbare obere Klemmbacken kann in Ausgestaltung der Erfindung durch einen Federungsschlitz der Halterplatte oberhalb des Klemmschlitzes gebildet sein, was es ermöglicht, in einer relativ grossen Platte an beliebigen Stellen derartige Schneideinsätze durch eine einfache Klemmhalterung zu befestigen. Diese Ausbildung eignet sich ersichtlich besonders gut für rotierende Werkzeuge, beispielsweise für Sägeblätter mit jeweils die Schneidspitzen bildenden, lösbar eingesetzten gehärteten Schneideinsätzen.

Dabei liegt es auch im Rahmen der Erfindung, den aufspreizbaren oberen Klemmbacken durch eine Klemmschraube gegen den unteren Klemmbacken anzudrücken. Neben der — jedoch nur bei relativ dicken Halterplatten — gangbaren einfachsten Art der Verspreizung, bei der die Klemmschraube die beiden Klemmbacken quer durchsetzt, ist dabei mit besonderem Vorteil auch eine Konstruktion möglich, bei der die Klemmschraube mit einem konischen Kopf in ein Gewinde am Ende eines zum Klemmschlitz geneigten, im wesentlichen parallelen Federungsschlitzes einschraubbar ist. Beim Einschrauben der Klemmschraube spreizt der konische Kopf den Federungsschlitz auseinander und drückt dabei zwangsläufig den aufspreizbaren oberen Klemmbacken gegen den starren unteren Klemmbacken der erfindungsgemässen Halterungsvorrichtung.

Der für die vorliegende Erfindung besonders wesentliche Einschubbegrenzungs-Anschlag, der für eine proportionale Erhöhung der Klemmkraft bei erhöhtem Schnittdruck sorgt, kann in Ausgestaltung der Erfindung besonders vorteilhaft ein am Klemmbacken angeformter, im wesentlichen L-förmiger Anschlagwinkel sein, an dem sich der Schneideinsatz mit seiner Rückseite abstützt. Um auch unter extremsten Bedingungen, beispielsweise beim Einsetzen der erfindungsgemässen Klemmhalterung für Sägeblätter mit geklemmten Schneideinsätzen, die mit mehr als zehntausend Umdrehungen rotieren, verwenden zu können, ohne dass die Gefahr besteht, dass Schneideinsätze herausgeschleudert werden, kann in Weiterbildung der Erfindung zusätzlich vorgesehen sein, dass die Schneidplatte auf der Unterseite mit einer Ausnehmung zur Aufnahme eines über die Auflagefläche des unteren Klemmbackens überstehenden Sicherungsnockens oder -stiftes versehen ist. Ein derartiger Sicherungsnocken oder -stift sorgt selbst im ungünstigsten Fall eines Verlustes der Klemmspannung dafür, dass der Schneideinsatz nicht aus seiner Halterung herausgeschleudert werden kann.

Um trotz dieses Sicherungsnockens ein einfaches Einsetzen des Schneideinsatzes zu ermöglichen, kann gemäss einem bevorzugten Merkmal der vorliegenden Erfindung die hintere untere Ecke des Klemmabschnitts mit einer Abrundung versehen sein. Dies ermöglicht dann ein zunächst schräges Eindrücken des Schneideinsatzes zwischen die Klemmbacken, ohne dass es eines besonders starken und dann ein Werkzeug erfordernden Aufspreizens der Klemmbacken bedürfte. Dies hat den grossen Vorteil, dass sich die Schneideinsätze einfach von vorne in die Halterung eindrücken lassen, ohne dass besondere Werkzeuge notwendig sind. Lediglich das Wiederlösen erfordert dann in den meisten Fällen den Einsatz eines Schraubendrehers oder eines ähnlichen Werkzeugs zum Anheben des oberen Klemmbackens.

Wenn eingangs in bezug auf den Halter für den Schneideinsatz davon die Rede ist, dass er gabelartig geschlitzt ist, so ist damit keineswegs gesagt, dass der Halter mit seinen beiden Klemmbacken ein einteiliges Bauteil sein muss. Vielmehr ist es auch möglich — und dies gestattet wiederum die Halterung beliebig geformter Schneidplatten für fräs- und spanabhebende Werkzeuge aller Arten, den oberen Klemmbacken mit dem Einschubbegrenzungs-Anschlag als ein in einer Ausnahme eines Halters, deren eine Seitenwand den unteren Klemmbacken bildet, lösbar befestigtes Bauteil auszubilden. Bei Schwerzerspanungswerkzeugen besteht nämlich immer wieder die Gefahr einer Zerstörung auch des Klemmbackens, so dass dann bei Mehrfachwerkzeugen das ganze Werkzeug unbrauchbar würde. Die Möglichkeit des Auswechselns des als separates Bauteil ausgebildeten lösbar befestigten oberen Klemmbackens schafft hiergegen eine wirksame Abhilfe. Darüber hinaus vermeidet sie auch die Fertigungsschwierigkeiten, die sich ergeben würden, wenn man nicht geschlitzte Halterplatten hat wie sie für Stechwerkzeuge Verwendung finden können, sondern breite Halter für die Aufnahme von grossen Schneidplatten.

Zur Befestigung des genannten Bauteils kann dabei vorgesehen sein, dass der mit einer einzigen Befestigungsschraube am Halter festlegbare Lagerabschnitt des Bauteils mit einer vorzugsweise zur Unterseite offenen Ausnehmung für einen darin eingreifenden Kipp-Arretieranschlag versehen ist. Dies ermöglicht das einfache von der Seite her erfolgende Einlegen des Bauteils in der Ausnehmung des Halters, wobei trotz Verwendung nur einer einzigen Befestigungsschraube eine Verkippung der Längsachse des Klemmschenkels nicht möglich ist, da ja durch den beispielsweise als Querbolzen ausgebildeten Kipp-Arretieranschlag ein zweiter beabstandeter Befestigungspunkt vorgesehen ist.

Die seitliche Anlage für die Schneidplatte kann sowohl in der Ausnehmung des Halters vorgesehen sein, als auch am oberen Klemmbacken an- bzw. eingeformt werden.

Diese letztere Anordnung der Anlage am oberen Klemmbacken hat zunächst den Vorteil, dass beliebig geformte Schneidplatten in ein- und demselben Grundhalter geklemmt werden können, wenn nur jeweils ein geeignetes, die oberen Klemmbacken bildendes Bauteil mit verwendet wird. Darüber hinaus kann man auf diese Weise extrem einfach auch Spannelemente für die Klemmhalterung von Dreikantplatten und noch komplexer gefomten Platten realisieren.

Die erfindungsgemässen, sehr schmal bauenden Stechwerkzeuge eignen sich in hervorragender Weise auch zum Aufbau von Mehrfachwerkzeugen. Dabei können mehrere Halterplatten mit eingeklemmten Schneideinsätzen parallel zueinander unter Verwendung von endmassartigen Distanzstücken in einer Halterausnehmung eines Halters durch einen das Plattenpaket über- und seitlich umgreifenden Klemmbügel gehalten sein, der seinerseits durch einen Klemmkeil verspannt ist.

Gemäss einer besonders vorteilhaften Weiterbildung können zwei, bevorzugt gemäss der vorstehend beschriebenen Klemmhalterung mit Schneideinsätzen versehene, parallel zueinander und mit ihrem Klemmabschnitt nach vorne überstehende Halterplatten in einem Halter eingeklemmt sein, wobei im Bereich des freien Endes der Halterplatten Verstelleinrichtungen zum Verkleinern und/oder Vergrössern des Halterplattenabstandes vorgesehen sind.

Durch dieses Verändern des Halterplattenabstandes lässt sich in besonders einfacher Weise eine beliebige Passung mit handelsüblichen Einstellplatten vornehmen, indem es zur Erzeugung eines Einstechschlitzes vorgegebener Breite nicht mehr notwendig ist, ein entsprechend breites Schneidwerkzeug vorzusehen. Dies ist nämlich insbesondere dann umständlich, wenn es sich um eine Nicht-Norm-Breite handelt, so dass dann Spezialschneideinsätze vorgesehen werden müssen. Darüber hinaus kann durch die erfindungsgemässe Konstruktion auch ein ständiges, sehr einfaches Nachstellen bei der unvermeidlichen Abnutzung der Schneideinsätze auf das gewünschte Endmass vorgenommen werden.

Am einfachsten lässt sich die erfindungsgemäss Verstelleinrichtung dadurch verwirklichen, dass in eine erste Halterplatte einschraubbare, sich an einer zweiten abstützende Spreizschrauben und zusätzlich die erste Halterplatte durchsetzende, in die zweite einschraubbare Konterschrauben vorgesehen sind. Durch derartige Spreiz- und Konterschrauben lassen sich die Halterplatten aneinander annähern oder auseinanderdrücken, so dass in Verbindung mit einer einfachen aufgesetzten Schublehre mit wenigsten Handgriffen eine gewünschte Justierung bzw. Nachjustierung erreicht werden kann.

Weitere Vorteile der Erfindung ergeben sich aus der nachfolgenden Beschreibung eines Ausführungsbeispiels, sowie an Hand der Zeichnung. Dabei zeigen :

Fig. 1 eine Seitenansicht einer erfindungsgemässen Halterplatte mit eingeklemmtem Schneideinsatz,

Fig. 2 eine vergrösserte Ansicht des Klemmabschnitts der Halterplatte,

Fig. 3 eine Ansicht des Schneideinsatzes,

Fig. 4 bis 6 unterschiedliche Ausbildungsmöglichkeiten der Ausbildung des Klemmabschnitts des Schneideinsatzes und der Klemmbacken,

Fig. 7 einen Ausschnitt aus einem Sägeblatt mit in unterschiedlicher Weise darin klemmend gehalterten Schneideinsätzen,

Fig. 8 bis 10 eine Seitenansicht, eine Draufsicht und einen vergrösserten Schnitt längs der Linie XI-XI durch einen Schneideinsatz mit zwei rückwärts in einem Halter eingespannten und am vorderen Ende gegeneinander verspreizbaren Halterplatten mit klemmend gehalterten Schneideinsätzen,

Fig. 11 eine vergrösserte Ansicht des Klemmbereichs einer Halterplatte eines Stechwerkzeug mit Sicherungsnocken zur Verhinderung eines Herausschleuderns des Schneideinsatzes,

Fig. 12 eine Ansicht der Anordnung nach Fig. 11 während des Einsetzens des Schneideinsatzes,

Fig. 13 ein Sägeblatt mit Klemmhalterung der Schneidzähne entsprechend den Fig. 11 und 12,

Fig. 14 ein Mehrfach-Fräswerkzeug zur Klemmhalterung von Schneidplatten, bei dem der obere Klemmbacken ein lösbar in eine Ausnehmung eingesetztes Bauteil ist,

Fig. 15 eine vergrösserte Seitenansicht einer der Klemmhalterung in Fig. 14,

Fig. 16 eine Ansicht der Plattenklemmung nach Fig. 15 in Richtung des Pfeils A und

Fig. 17 und 18 Ansichten in Richtung des Pfeils B, in Fig. 15 für verschiedene Plattenformen.

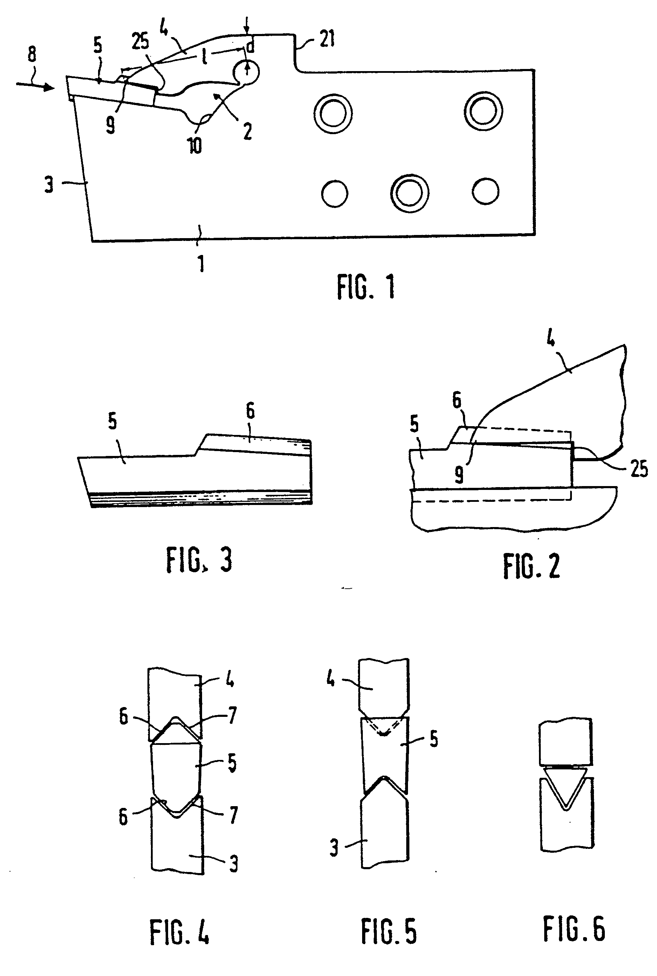

Mit 1 ist eine Halterplatte bezeichnet, in der durch einen Schlitz 2 zwei Klemmbacken gebildet sind und zwar ein starrer unterer Klemmbacken 3 und ein aufspreizbarer oberer Klemmbacken 4. Die zum Aufspreizen des oberen Klemmbackens 4 notwendige Kraft, die dann auch entsprechend als Klemmkraft umsetzbar ist, ergibt sich dabei durch die Ausbildung des Schlitzes, d.h. einfach ausgedrückt durch die Dicke d am Ende des Gabelarmes und seine Länge 1. Zwischen diesen beiden Gabelarmen 3 und 4 ist ein Schneideinsatz 5 klemmend gehaltert, der im Ausführungsbeispiel nach den Fig. 1 bis 3 im Bereich seines Halterungsabschnittes oben und unten jeweils ein Prisma 6 aufweist, während die beiden Klemmbacken 3 und 4 entsprechende dreieckige Aufnahmenuten 7 besitzen. In Fig. 5 ist die inverse Ausbildung der Klemmflächen zu der in Fig. 4 gezeigten Konfiguration dargestellt, während gemäss Fig. 6 eine vereinfachte Ausbildung ebenfalls möglich wäre, bei der die oberen Klemmflächen eben ausgebildet sind.

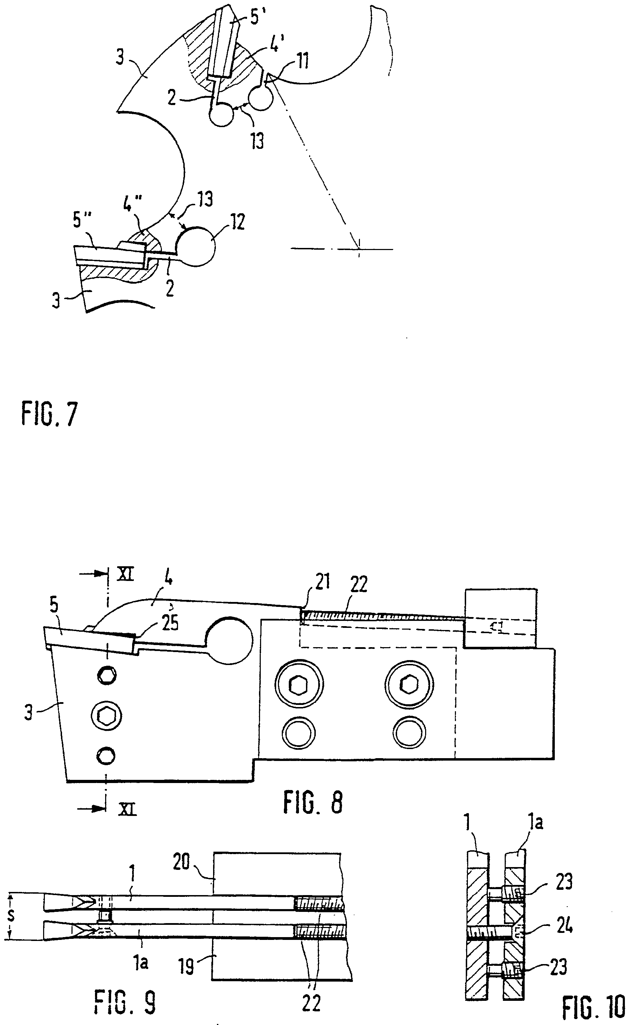

Die als dreieckige Nuten ausgebildeten Klemmflächen 7 der Klemmbacken 3 und 4 verlaufen in Einschubrichtung 8 des Schneideinsatzes, d.h. nach innen in den Halter hinein parallel zueinander, was die Einarbeitung dieser Flächen bei der Herstellung der Halterplatte 1 besonders vereinfacht. Dafür sind die prismatischen Klemmflächen 6 des Schneideinsatzes 5 nach rückwärts konvergierend zueinander ausgebildet. Dadurch ist gewährleistet, dass selbst beim Aufspreizen des oberen beweglichen Klemmbakkens die sich dabei ergebende divergierende Ausbildung der Klemmflächen 7 gegeneinander immer noch geringer ist als die Divergenz der Klemmflächen 6 nach vorne, so dass auf jeden Fall der Klemmbacken am vorderen Ende, d.h. im Bereich 9 in Abstand vom hinteren Schneideinsatzende auf diesem aufliegt. Wäre dies nicht der Fall, so würde unter der Klemmwirkung der Schneideinsatz ja quasi nach vorne herausgezwängt. Das Aufspreizen des Klemmschenkels 4 gegenüber dem Klemmschenkel 3 kann durch Einlegen und Verdrehen eines elliptischen Schlüssels in den Abschnitt 10 des Klemmschlitzes 2 bewirkt werden, wobei stattdessen aber auch eine parallele Schlitzausbildung wie bei Fig. 7 vorgesehen sein könnte, so dass das Aufspreizen mit Hilfe eines normalen Schraubendrehers erfolgen könnte.

Bei dem in Fig. 7 ausschnittsweise gezigten Sägeblatt sind verschiedene zusätzliche Varianten der Aubildung der erfindungsgemässen Schneideinsatzklemmung dargestellt. Der Schneideinsaz 5' wird durch einen oberen Klemmbacken 4' klemmend gehalten, der seinerseits dadurch gebildet ist, dass im wesentlichen parallel zum eigentlichen Klemmschlitz 2 ein Federungsschlitz 11 vorgesehen ist. Beim Schneideinsatz 5" ist der Klemmschlitz 2 so gelegt und insbesondere mit einer solchen rückwärtgen erweiterten Ausnehmung 12 versehen, dass eine schmale Brücke bei 13 gebildet ist, so dass sich auf diese Weise ein aufspreizbarer oberer Klemmschenkel 4" ergibt.

Die Fig. 8 bis 10 zeigen zwei parallel zueinander in einem Halter 19 verkiemmte Halterungsplatten 1 und 1a, die nach vorne ein erhebliches Stück über den Halter 19 überstehen. Die Halterung der Platten im Halter 19 erfolgt beispielsweise mit Hilfe von nicht dargestellten, die in Fig. 1 gezeigten Bohrungen durchsetzenden Spannbolzen. Der exakte vordere Überstand der Halterplatten 1 und 1a über die Stirnfläche 20 des Halters 19 lässt sich mit Hilfe von an einer Schulter 21 anliegenden Gewindebolzen 22 einstellen. Entscheidend bei der Konstruktion nach den Fig. 8 und 10 ist das Vorsehen zweier in die Halterplatte 1a eingeschraubter, sich auf der Halterplatte 1 abstützender Spreizschrauben 23, sowie einer zwischen ihnen angeordneten Konterschraube 24, die mit ihrem Gewindeabschnitt in ein Gegengewinde der Halterplatte 1 eingreift und sich mit ihrem Kopf an der Halterplatte 1a abstützt. Mit Hilfe dieser Schrauben lässt sich nämlich der Abstand der Platten und damit die Schnittweite sehr einfach einstellen, so dass unter Verwendung handelsüblicher Schneideinsätze stufenlos jede gewünschte Schnittweite eingestellt werden kann und umgekehrt auch die unvermeidliche Abnutzung der Schneidkanten durch entsprechendes Nachspreisen der Halterplatten 1 und 1a ausgeglichen werden kann.

Zur Verdeutlichung möchten wir an dieser Stelle noch darauf hinweisen, dass durch das Anliegen des Schneideinsatzes 5 in den Fig. 1, 7 und 8 im Anschlag 25 eine Hebeiwirkung erzeugt wird, die den Schneideinsatz zusätzlich in das Doppelprismasystem klemmt.

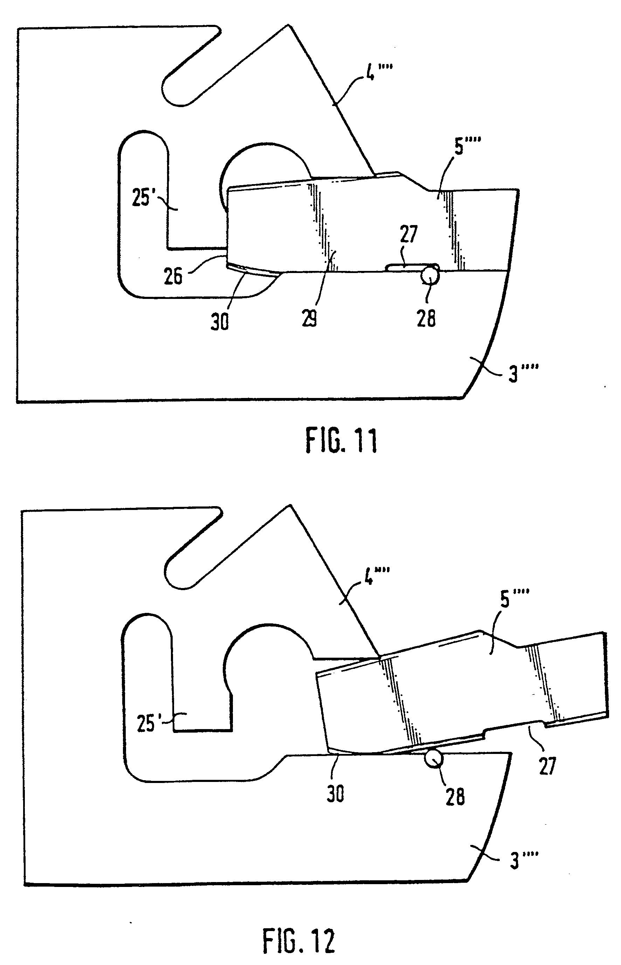

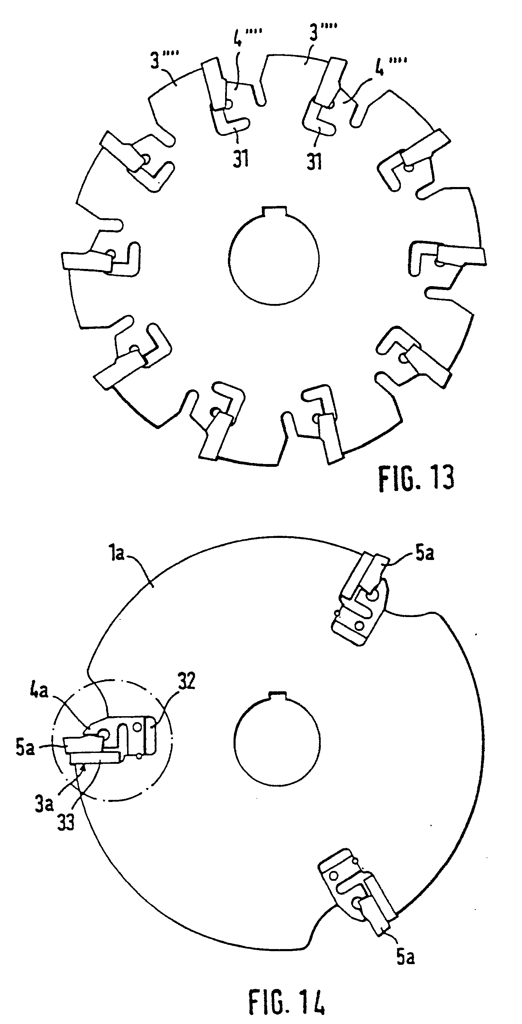

Die Fig. 11 und 12 zeigen eine Ausbildung der erfindungsgemässen Klemmhalterung, bei welcher der Einschubbegrenzungs-Anschlag des oberen Klemmbackens 4"" als im wesentlichen L-förmiger Anschlagwinkel 25' ausgebildet ist, der der Rückseite 26 des Schneideinsatzes 5"" anliegt. Der Schneideinsatz weist dabei unterseitig eine Ausnehmung 27 für einen im dargestellten Ausführungsbeispiels als über die Auflagefläche des unteren Klemmbackens 3"" überstehender Bolzen ausgebildeten Sicherungsnockens 28 auf, der auch bei einem Verlust der Klemmspannung bzw. bei dem Auftreten zu grosser auf den Schneidkörper ziehend einwirkender Kräfte (insbesondere Zentrifugalkräfte bei rotierenden Werkzeugen) werhindert, dass der Schneideinsatz 5"" herausgeschleudert werden kann. Dabei ist es selbstverständlich nicht unbedingt erforderlich, dass die Ausnehmung 27 ein gewisses Spiel ermöglicht wie es im Ausführungsbeispiel nach den Fig. 11 und 12 vorgesehen ist. Vielmehr könnte die Ausnehmung 27 auch der Form des überstehenden Nockens 28 angepasst sein. Um trotz des Vorsehens des Nockens 28 den Schneideinsatz 5"" einfach und ohne grosse Vorsufspreizen des oberen Klemmbackens 4"" einsetzen zu können, ist die hintere untere Ecke des Klemmabschnittes 29 mit einer Abrundung 30 versehen, so dass ein schräges Eindrücken möglich ist, wie es in Fig. 13 dargestellt ist.

Die Fig. 13 zeigt ein Sägeblatt, bei dem die einzelnen Schneidzähne durch eine Klemmhalterung entsprechend den Fig. 11 und 12 gehaltert sind. Die besondere Formgebung, d.h. die Ausbildung der Klemmbacken 3"" und 4"" bei Vorsehen insbesondere auch des L-förmigen Einschnitts 31, führt dabei sowohl zu einer besonderen Stabilisierung des Sägeblatts infolge der Vorspannungen, als auch zu einer hohen Ventilatonswirkung mit Luft und Wasser. Dadurch lassen sich die sehr hohen, beim Arbeiten auftretenden Wärmemengen relativ einfach und problemlos abführen.

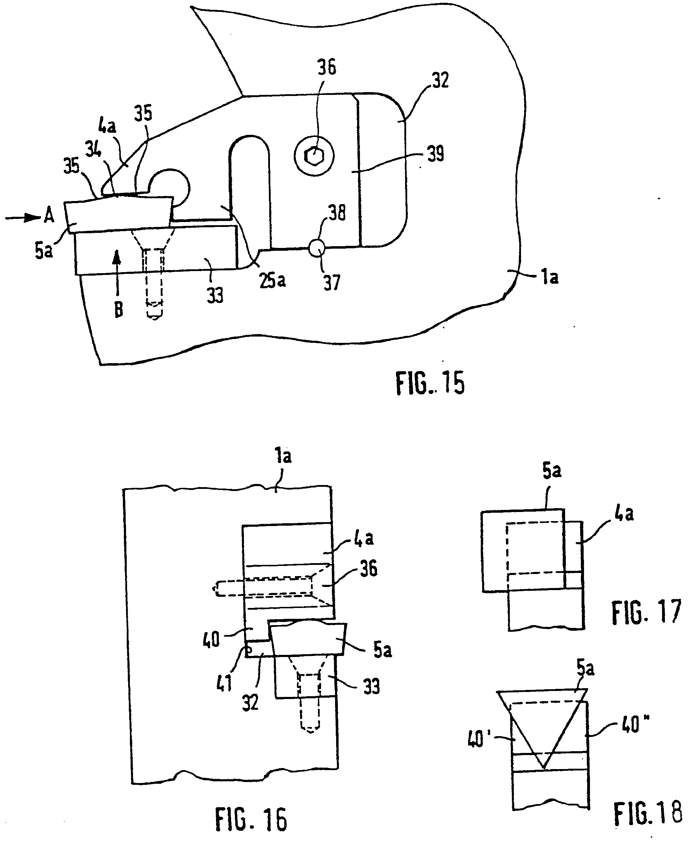

Fig. 14 zeigt ein als Dreifachwerkzeug aufgebautes Fräswerkzeug, bei dem die einzelnen Schneidplatten 5a durch eine entsprechende, mit dem Schneiddruck proportional stärker verklemmende Klemmhalterung gehaltert sind, wie sie in den vorhergehenden Figuren bereits beschrieben worden ist. Der entscheidende Unterschied besteht dabei lediglich darin, dass das Klemmteil nicht eine einteilige Halteplatte ist, sondern der obere Klemmbacken ein lösbar in eine Ausnehmung 32 des Halterteils 1a eingesetztes und darin verschraubtes Bauteil ist, während eine Wand der Ausnehmung 32 — auf die im dargestellten Ausführungsbeispiel erst noch eine auswechselbare Unterlegplatte 33 aufgebracht ist — den unteren Klemmbacken 3a bildet. Gerade bei Schwerzerspanungen kann es vorkommen, dass nicht nur die Platte, sondern auch die Halterung beschädigt wird. Die Trennung der Klemmbakken 3a und 4a ermöglicht dann ein Auswechseln des beschädigten oberen Klemmbackens 4a durch ein neues Bauteil. Die Halterung ist dabei im einzelnen an Hand der Fig. 15 bis 18 dargestellt.

Der wiederum als im wesentlichen L-förmiger Anschlagwinkel ausgebildete Einschubbegrenzungs-Anschlag 25a sorgt auch bei dieser Plattenhalterung für eine selbsttätige proportionale Erhöhung des Klemmdrucks bei zunehmendem Schneiddruck. Die Befestigung des den oberen Klemmbacken 4a umfassenden Bauteils erfolgt im dargestellten Ausführungsbeispiel mit Hilfe einer Befestigungsschraube 36, sowie eines Kipp-Arretieranschlags in Form eines Querbolzens 37, der in eine Ausnehmung 38 am unteren Ende des Lagerabschnitts 39 des lösbaren Bauteils eingreift. In Fig. 16 und 17 ist dabei angedeutet, dass am oberen Klemmbacken 4a auch die seitliche Anlage 40 für die Schneidplatte 5a mit angeformt ist, obgleich diese gerade im Falle einer solchen rechteckigen Platte auch durch die Bodenwand 41 der Ausnehmung 32 des Halters 1a gebildet sein könnte. Besonders vorteilhaft ist aber das An- bzw. Einformen der seitlichen Anlage für die Klemmplatte bei komplexeren Schneidplattenformen, beispielsweise der in Fig. 18 dargestellten Dreikant-Platte mit seitlichen Anlageteilen 40' und 40".

Die Erfindung ist nicht auf die dargestellten Ausführungsbeispiele beschränkt. Insbesondere wäre für die Befestigung mehrerer Halterplatten bei einem Mehrfach-Einstechwerkzeug in einer Ausnehmung eines grossen Halters auch eine Schnell-Bügelverspannung möglich, wobei Passungsnuten am unteren oder oberen Rand der Halterplatten 1 vorgesehen sind, in welche entsprechende Gegenpassungsrippen der Spannvorrichtung eingreifen.

**Patentansprüche**

1. Spanabhebendes Werkzeug, insbesondere Stechwerkzeug, mit einer gabelartig geschlitzten Halterplatte (1) zum Einklemmen eines Schneideinsatzes (5), wobei der Klemmschlitz (2) so ausgebildet ist, daß die Klemmbacken (3, 4) der Halterplatte (1), von denen der obere (4) aufspreizbar ist, den Schneideinsatz (5) mit einer vorgegebenen Klemmspannung haltern und der Schneideinsatz (5) und der obere Klemmbacken (4) mit einem Einschubbegrenzungs-Anschlag (25) versehen sind, derart, daß der Schnittdruck zu einer proportionalen Erhöhung der Klemmspannung führt, dadurch gekennzeichnet, daß der Klemmschlitz (2) mit einer rückseitig vom Anschlag (25) ausgehenden Ausnehmung (12) versehen ist, die sich von der Längsrichtung des Klemmschlitzes (2) abweichend im oberen Klemmbacken (4) dergestalt erstreckt, daß zu dessen Aufspreizbarkeit eine sichtbar schmal ausgeprägte, als Gelenkstelle wirkende Brücke (d, 13) gebildet wird, und daß die Klemmfläche (7) des oberen Klemmbackens (4) gegenüber der Klemmfläche (6) des Schneideinsatzes (5) leicht nach innen ansteigt, so daß insgesamt eine wesentliche, den Schneideinsatz (5) in die Klemmbacken (3, 4) einklemmende Hebelwirkung entsteht.

2. Werkzeug nach Anspruch 1, gekennzeichnet durch einen im wesentlichen ovalen Schlitzbereich (10) zum Einsetzen eines entsprechenden Aufspreizschlüssels.

3. Werkzeug nach Anspruch 1 oder 2, dadurch gekennzeichnet, daß die Klemmfläche (7) wenigstens eines Klemmbackens (3, 4) mit einer zur Ausbildung der anliegenden Klemmfläche (6) des Schneideinsatzes (5) korrespondierenden, vorzugsweise querschnittlich dreieckigen Einmuldung bzw. Wölbung versehen ist.

4. Werkzeug nach Anspruch 1-3, dadurch gekennzeichnet, daß die Klemmflächen (7) der Halterplatte (1) nach rückwärts parallel zueinander verlaufen.

5. Werkzeug nach einem der Ansprüche 1 bis 4, dadurch gekennzeichnet, daß der aufspreizbare obere Klemmbacken (4) durch einen Federungsschlitz (11) der Halterplatte (1) oberhalb des Klemmschlitzes (2) gebildet ist.

6. Werkzeug nach einem der Ansprüche 1 bis 5, dadurch gekennzeichnet, daß der Einschubbegrenzungs-Anschlag ein am oberen Klemmbacken (4) angeformter, im wesentlichen L-förmiger Auschlagwinkel (25', 25a) ist, an den sich der Schneideinsatz (5'''', 5a) mit seiner Rückseite abstützt.

7. Werkzeug nach einem der Ansprüche 1 bis 6, dadurch gekennzeichnet, daß der als Schneidplatte ausgebildete Schneideinsatz (5) auf der Unterseite mit einer Ausnehmung (27) zur Aufnahme eines über die Auflagefläche des unteren Klemmbackens (3) überstehenden Sicherungsnockens oder -stiftes (28) versehen ist.

8. Werkzeug nach Anspruch 7, dadurch gekennzeichnet, daß die hintere untere Ecke des Klemmabschnittes (29) mit einer Abrundung (30) versehen ist.

9. Werkzeug nach Anspruch 7 oder 8, dadurch gekennzeichnet, daß der Klemmabschnitt (29) mit V-förmigen Prismenflächen bzw. -nuten versehen ist.

10. Werkzeug nach einem der Ansprüche 1 bis 6, insbesondere zur Halterung von Schneidplatten, dadurch gekennzeichnet, daß der obere Klemmbacken (4a) mit dem Einschubbegrenzungs-Anschlag (25a) ein in einer Ausnehmung (32) eines Halters (1a), deren eine Seitenwand den unteren Klemmbacken (3) bildet, lösbar befestigtes Bauteil ist.

11. Werkzeug nach Anspruch 10, dadurch gekennzeichnet, daß der mit einer Befestigungsschraube (36) am Halter (1a) festlegbare Lagerabschnitt (39) des Bauteils mit einer, vorzugsweise zur Unterseite offenen, Ausnehmung (38) für einen darin eingreifenden Kipp-Arretieranschlag versehen ist.

12. Werkzeug nach Anspruch 11, dadurch gekennzeichnet, daß der Kipp-Arretieranschlag ein Querbolzen (37) ist.

13. Werkzeug nach einem der Ansprüche 10 bis 12, dadurch gekennzeichnet, daß die seitliche Anlage (40) für die Schneidplatte (5a) am oberen Klemmbacken (4a) an- bzw. eingeformt ist.

14. Werkzeug nach einem der Ansprüche 1 bis 19, dadurch gekennzeichnet, daß wenigstens zwei im wesentlichen parallel zueinander und mit ihren Klemmabschnitten nach vorne überstehende Halterplatten (1, 1a) in einem Halter (19) eingeklemmt sind, und daß im Bereich des freien Endes der Halterplatten (1, 1a) Verstelleinrichtungen zum Verkleinern und/oder Vergrößern des Halterplattenabstandes vorgesehen sind.

15. Werkzeug nach Anspruch 14, dadurch gekennzeichnet, daß in eine erste Halterplatte (1a) einschraubbare, sich an einer zweiten abstützende Spreizschrauben (23) und die erste Halterplatte (1a) durchsetzende in die zweite Halterplatte (1) einschraubbare Konterschrauben (24) vorgesehen sind.

**Claims**

1. A cutting tool, particularly a piercing tool, having a holding plate (1), slit in a fork-like manner, to grip a tool bit (5), the clamping slot (2) being so formed that the clamping jaws (3, 4) of the holding plate (1), of which the upper one (4) can be expanded, hold the tool bit (5) with a preset clamping tension, and the tool bit (5) and the upper clamping jaw (4) being provided with an insertion-limiting stop (25) in such a manner that the cutting pressure leads to a proportional increase in the clamping tension, characterised in that the clamping slot is provided with a recess (12) extending from the rear side of the stop (25) which recess diverges into the upper clamping jaw (4) in such a manner that for the expansion of the latter there is formed a perceptibly small, distinct bridge (d, 13) that acts as a point of articulation, and that the clamping surface (7) of the upper clamping jaw (4) slopes slightly inwards in comparison with the clamping surface (6) of the tool bit (5), so that altogether there exists an essential lever action clamping the tool bit (5) in the clamping jaws 3, 4.

2. A tool as claimed in Claim 1, characterised by a substantially oval slot region (10) for the insertion of a corresponding expanding key.

3. A tool as claimed in Claim 1 or 2, characterised in that the clamping surface (7) of at least one clamping jaw (3, 4) is provided with a through or curvature corresponding to the formation of the adjacent clamping surface (6) of the tool bit (5) and preferably triangular in cross-section.

4. A tool as claimed in Claim 1 to 3, characterised in that the clamping surfaces (7) of the holding plate (1) extend backwards parallel to one another.

5. A tool as claimed in one of Claims 1 to 4, characterised in that the expansible upper clamping jaw (4) is formed by a flexing slot (11) in the holding plate (1) above the clamping slot (2).

6. A tool as claimed in one of Claims 1 to 5, characterised in that the insertion-limiting stop is a substantially L-shaped stop angle (25', 25a) against which the tool bit (5'''', 5a) is supported by its back.

7. A tool as claimed in one of Claims 1 to 9, characterised in that the tool bit (5) formed as a cutting bit is provided, at the under side, with a recess (27) to receive a retaining dog or locking pin (28) projecting above the bearing surface of the lower clamping jaw (3).

8. A tool as claimed in Claim 7, characterised in that the rear lower corner of the clamping portion (29) is rounded (30).

9. A tool as claimed in Claim 7 or 8, characterised in that the clamping portion (29) is provided with V-shaped prism surfaces or grooves.

10. A tool as claimed in one of Claims 1 to 6, particularly for holding cutting bits, characterised in that the upper clamping jaw (4a) with the insertion-limiting stop (25a) is a component which can be detachably secured in a recess (32) in a holder (1a), one side wall of which forms the lower clamping jaw (3).

11. A tool as claimed in Claim 10, characterised in that the mounting portion (39) of the component, which can be located on the holder (1a) by an assembly screw (36), is provided with a recess (38), which is preferably open towards the bottom, for a tilting-preventing stop engaging therein.

12. A tool as claimed in Claim 11, characterised in that the tilting-preventing stop is a transverse pin (37).

13. A tool as claimed in one of Claims 10 to 12, characterised in that the lateral stop (40) for the cutting bit (5a) is formed on or in the upper clamping jaw (4a).

14. A tool as claimed in one of Claims 1 to 9, characterised in that at least two holding plates (1, 1a) are gripped in a holder (19), substantially parallel to one another and with their clamping portions projecting forwards, and that adjusting devices are provided in the region of the free end of the holding plates (1, 1a) to reduce and/or increase the spacing of the holding plates.

15. A tool as claimed in Claim 14, characterised in that adjusting screws (23), which can be screwed into a first holding plate (1a) and are supported against a second, and counter screws (24), which pass through the first holding plate (1a) and can be screwed into the second holding plate (1), are provided.

## Revendications

1. Outil d'enlèvement de copeaux, notamment outil de soyage, muni d'une plaque de retenue (1) fendue en forme de fourche afin d'enserrer une plaquette de coupe (5), la fente de serrage (2) étant réalisée de telle sorte que les mâchoires de serrage (3, 4) de la plaque de retenue (1), parmi lesquelles la mâchoire supérieure (4) peut être déployée, emprisonnent la plaquette de coupe (5) avec une tension d'enserrement prédéterminée, et la plaquette de coupe (5) et la mâchoire supérieure de serrage (4) sont munies d'une butée (25) limitant la profondeur d'insertion, de façon que la pression de coupe provoque un accroissement proportionnel de la tension d'enserrement, caractérisé par le fait que la fente de serrage (2) est pourvue d'un évidement (12) qui part postérieurement de la butée (25) et qui s'étend dans la mâchoire supérieure de serrage (4), en s'écartant de la direction longitudinale de la fente de serrage (2), de manière à former, en vue de la faculté de déploiement de ladite mâchoire, un pont (d, 13) qui est manifestement d'une étendue étroite, et remplit la fonction d'une zone d'articulation ; et par le fait que la surface de serrage (7) de la mâchoire supérieure de serrage (4) accuse une légère pente ascendante vers l'intérieur par rapport à la surface de serrage (6) de la plaquette de coupe (5), de façon qu'il en résulte, globalement, un effet de levier notable qui coince la plaquette de coupe (5) dans les mâchoires de serrage (3, 4).

2. Outil selon la revendication 1, caractérisé par une région (10) sensiblement ovale de la fente, en vue de l'engagement d'une clé d'écartement correspondante.

3. Outil selon la revendication 1 ou 2, caractérisé par le fait que la surface de serrage (7) d'au moins une mâchoire de serrage (3, 4) est respectivement pourvue d'un creux ou d'un bombement correspondant ayant de préférence une section triangulaire, afin de former la surface de serrage attenante (6) de la plaquette de coupe (5).

4. Outil selon les revendications 1-3, caractérisé par le fait que les surfaces de serrage (7) de la plaque de retenue (1) sont d'une étendue mutuellement parallèle vers l'arrière.

5. Outil selon l'une des revendications 1 à 4, caractérisé par le fait que la mâchoire de serrage supérieure déployable (4) est formée par une fente élastique (11) de la plaque de retenue (1), au-dessus de la fente de serrage (2).

6. Outil selon l'une des revendications 1 à 5, caractérisé par le fait que la butée limitant la profondeur d'insertion consiste en une cornière de butée (25', 25a) sensiblement configurée en L, ménagée solidairement sur la mâchoire supérieure de serrage (4), et contre laquelle la plaquette de coupe (5'''', 5a) prend appui par sa face postérieure.

7. Outil selon l'une des revendications 1 à 6, caractérisé par le fait que la plaquette de coupe (5) réalisée en tant que plaque de coupe est munie, à sa face inférieure, d'un évidement (27) pour recevoir un téton ou goupille d'arrêt (28) faisant saillie au-delà de la surface de contact de la mâchoire inférieure de serrage (3).

8. Outil selon la revendication 7, caractérisé par le fait que le coin postérieur inférieur de la région d'enserrement (29) est doté d'un arrondi (30).

9. Outil selon la revendication 7 ou 8, caractérisé par le fait que la région d'enserrement (29) est respectivement pourvue de surfaces ou gorges prismatiques configurées en V.

10. Outil selon l'une des revendications 1 à 6, en particulier pour retenir des plaques de coupe, caractérisé par le fait que la mâchoire supérieure de serrage (4a) forme, avec la butée (25a) limitant la profondeur d'insertion, une pièce constitutive fixée amoviblement dans un évidement (32) d'un support (1a), dont une paroi latérale forme la mâchoire inférieure de serrage (3).

11. Outil selon la revendication 10, caractérisé par le fait que la zone de montage (39) de la pièce constitutive, pouvant être assujettie au support (1a) par une vis de fixation (36), est munie d'un évidement (38) ouvert de préférence vers la face inférieure, pour une butée d'arrêt basculante qui s'y engage.

12. Outil selon la revendication 11, caractérisé par le fait que la butée d'arrêt basculante est une goupille transversale (37).

13. Outil selon l'une des revendications 10 à 12, caractérisé par le fait que l'appui latéral (40) pour la plaquette de coupe (5a) est respectivement ménagé sur ou dans la mâchoire supérieure de serrage (4a).

14. Outil selon l'une des revendications 1 à 19, caractérisé par le fait qu'au moins deux plaques de retenue (1, 1a), sensiblement parallèles l'une à l'autre et dépassant vers l'avant par leurs régions d'enserrement, sont emprisonnées dans un support (19) ; et par le fait que des dispositifs d'ajustement sont prévus, au voisinage de l'extrémité libre des plaques de retenue (1, 1a), afin de diminuer et/ou d'agrandir l'espacement entre les plaques de retenue.

15. Outil selon la revendication 14, caractérisé par le fait que sont prévues des vis d'écartement (23) pouvant être vissées dans une première plaque de retenue (1a) et prenant appui contre une seconde, et des contre-vis (24) pouvant être vissées dans la seconde plaque de retenue (1), en traversant la première plaque de retenue (1a).

FIG. 1

FIG. 3

FIG. 2

FIG. 4

FIG. 5

FIG. 6

FIG. 7

FIG. 8

FIG. 9

FIG. 10

FIG. 11

FIG. 12

FIG. 13

FIG. 14

FIG.. 15

FIG. 16

FIG. 17

FIG.18